# EUROPEAN PATENT APPLICATION

(11) **EP 1 162 558 A1**
(43) Date of publication of application: **12.12.2001**
(21) Application number: 00830401.6
(22) Date of filing: 06.06.2000
(51) Int. Cl.: G06F 17/60

(54) **The internet global flea market newspaper**

(30) Priority: 06.06.2000 IT RM200606
(71) Applicant: Camilli, Carlo, 00178 Rome (IT)
(72) Inventor: Camilli, Carlo, 00178 Rome (IT)

(57) **Abstract**

In short the invention revolutions the field of free ads newspapers in that it makes possible to have at any moment a paper that is always new. In fact free ads are coming in all the time; the very moment a person is looking at the paper to find something of interest there are other people around the world who are sending in new ads.

The invention makes publishing and/or reading the economic and personal ads a continuous process regardless of time, place, language, culture and/or any psychological barrier.

The invention makes the virtual paper a Global one versus current free ads newspapers which a limited reach rarely extending beyond the city limits.

Costs are also dramatically lower, being fixed and variable costs absolutely low versus the now high cost of current free ads newspapers who shoulder costs for having receptionists, an editorial staff, raw paper material, printing, distributing and consequently the high price paid by a reader to have access to the free ads.

The INTERNET GLOBAL FLEA MARKET NEWSPAPER cuts out all that and consequently, on top of all the other advantages offers the advertiser and the reader a transaction at comparatively much lower cost and a global reach.

## Description

### Description of Invention:

this invention finds application mainly in the field of free economic advertisements newspapers, where a seller or a buyer places one or more economic and/or personal adver tisements by phone, fax, mail or in person. Such advertise ments, published free of charge by the Editor, are aimed at people who wishes to conduct economic transactions without the aid of intermediaries.

### State of the art:

currently there is a wide number of free ads newspapers in the major cities of the world specialized in publishing advertisements of people who want to sell/buy anything used (mainly) whose economic value ranges from a fraction of an EURO to several thousands. Some products are so unique that the value cannot be defined. . These papers also carry advertisements with a personal content. "Seconda Mano in Milano", "La Pulce in Florence" and the likes are published throughout the world.

These papers have sprung out in the last 20 years or so, and are better known as the "Flea Market Newspapers". They are published daily, biweekly, weekly or once every two weeks and so on, depending on the number of ads published and the market demand. Thus a Free Ads Newspaper is "new" only the moment it reaches the news stand. A minute later is already old, not to mention a day or two later.

### The invention:

The invention foresees the use of Internet to send in the free ads and most of all to "Read" the Free Ads Newspaper through the same means, thus without a physical, paper-based medium as it is today.

The invention works as follows:
a) placing the free advertisements:
   any person who wishes to send in an advertisement to the "Virtual Newspaper" does so by connecting with the Internet web of the Virtual Paper, clicks under the section in which it wants to publish his/her advertisement and disconnects once done. The person cannot consult/view/ read the other ads of the paper while placing an advertisement. Ads will be published free of charge as it is done today.
b) reading the Virtual Paper carrying the free ads:
   those who wish to read the newspaper, that is its advertise ments, just connect themselves with the web of the same via Internet or similar electronic means and clicks under the section of interest. The reader can either read the paper on video or can download the file to his/her home computer and have it printed. Each incoming request to place the free ads and read the Paper will be handled by the software without any intervention by the operator.

The Editor will charge a fee for every connection aimed at reading/downloading the paper or parts of it according to an automatic mechanism that will be developed at a later date.

There is no charge for placing the advertisement.

Advantages/ improvements brought by this invention versus current free ads newspapers are numerous. The main ones are:
1)the invention makes the Virtual Free Ads Newspaper always new, in every instant, anywhere, anytime because placing ads and reading the Paper is a continuous timeless process that never stops regardless of time and place , versus present Free Ads Newspaper that come out daily, weekly and the likes and have office hours for accepting the incoming ads. The invention makes it a 24 hour business, three hundred and sixty five days a year.
2) it's basically a cost free process for publishing ads versus current cost of a telephone call, fax, mail and the rest be it local, long distance and international. The price paid to the Editor of the Virtual Paper for reading it, is far lower than the price of a paper-based Newspaper bought at the news stand;
3) there is no geographical, psychological, language and/or cultural barrier. It involves no receiving operators and/or person to person contact;
4) it's a Global Paper, in fact it is possible to consult the Paper from any part of the world, anytime of the day and night, from home and/or office without having to wait for the day the paper comes out at the newsstand and having to go out in order to purchase it, versus the present set up in which a person can basically get only the local paper in a fixed day of the week/ month.
5) it means that the process of selling and buying through the publication of an advertisement takes place in real-time thus accelerating the whole process.

One possible way to apply the invention:
a) develop the necessary software to handle automatically both the incoming free ads and have them published under the section of the paper chosen by the advertiser and handle the incoming requests to "read the paper" and/or download the paper itself to have it printed at home/office in its entirety or part of it.
b) open up a web in Internet advertising the new, Internet Global Flea Market Newspaper and how it works;
c) set up the necessary hardware
d) from the industrial point of view the invention can be applied to the stated economic fields and have global reach and thus be in itself and enterprise of considerable dimension. Other applications are also possible but for the moment the two outlined are the major ones.

## Claims

1. The invention asks for protection in the field of "Free Ads Virtual Newspapers" **characterized in that** there is no paper-based newspaper as we are used to but a virtual one that exists only on the monitor screen until it's printed at home and/or office if one wishes to do so. The Virtual Newspaper is a lower cost, much faster, timeless, placeless process of placing/reading the ads. This instantaneous and continuous process makes the Virtual Paper always new versus current ones that are old one minute after they reach the newsstand, and can be bought/read while staying at home instead of having to go out to get it, are limited geographically and poorer versus the "Virtual, Global Flea Market Newspaper", that is Global and not confined to a city and/or geographical area;

2. The invention asks for protection in the field of virtual financial newspapers following the same mechanism as above, with the difference that the news input is done by the Editor while the reader pays a fee to read/download the paper from the screen.
